# EUROPEAN PATENT APPLICATION

(11) **EP 4 343 298 A1**
(43) Date of publication of application: **27.03.2024**
(21) Application number: 22306397.5
(22) Date of filing: 22.09.2022
(51) Int. Cl.: G01L 5/22, A63B 21/00, A63B 21/002

(54) **A PORTABLE HANDHELD DEVICE FOR MEASURING THE MANUAL CLAMPING FORCE OF A PERSON**

(71) Applicant: Kinvent Biomecanique, 34960 Montpellier (FR)
(72) Inventor: ATHANASSOPOULOS, Emmanouil, 34000 MONTPELLIER (FR); KOLLIAS, Athanase, 34170 CASTELNAU-LE-LEZ (FR); KOTOPOULOS, Athanasios, THESSALONIKI (GR); LI, Tong, 75000 PARIS (FR)
(74) Representative: IPAZ

(57) **Abstract**

The invention relates to a portable handheld device (100) for measuring the clamping force of a hand of a person of interest, POI, said device comprising:
- a force measuring body (110), enclosed in a housing (112), provided to be held and clamped by said hand of said POI around a longitudinal direction (102) of said body (110), and measure a clamping force of said hand; and
- at least one grip (120), provided to be removably fixed to said body (110), and adapt the size of said device (100;400) in at least one direction.

## Description

### Field of the invention

The present invention relates to a portable handheld device for measuring the manual clamping force of a person.

The field of the invention is the field of portable handheld devices for measuring the manual clamping, or gripping, force of a person.

### Background

In various situations, portable handheld devices are needed for measuring the clamping force of a hand of a person. For example, practitioners, such as doctors or physiotherapist, need to measure the clamping force of a hand of a person during a diagnosis, or a period of rehabilitation. These devices may also be used by trainers for measuring the performance of an athlete, and optionally monitoring said performance over time during a training period for example.

There are a variety of portable handheld devices for measuring the clamping force of the hand of a person. In a non-limitative example of use, the measuring device is held in the palm of a hand of the use and the user exerts a force on/around the device by clamping, or gripping, it. One or several sensors are arranged in the device for measuring the force applied by the user on the device.

Despite all efforts, current portable handheld devices are not adapted to all users. This yields either to uncomfortable use of the device for some users, or to the use of different devices for different users. This later case yields to inaccurate measurements over time, and is expensive.

A purpose of the present invention is to overcome at least one of these drawbacks.

Another purpose of the present invention is to provide a portable handheld device for measuring the clamping force of a hand of a person that is more adapted and more ergonomic to use for different users.

Another purpose of the present invention is to provide a portable handheld device for measuring the clamping force of a hand of a person the usability of which is improved.

Another purpose of the present invention is to provide a portable handheld device for measuring the clamping force of a hand of a person, providing more accurate results over time.

### Summary of the invention

The invention makes it possible to achieve at least one of these aims by a portable handheld device for measuring the clamping force of a hand of a person of interest, POI, said device comprising:
- a force measuring body, enclosed in a housing provided to be held and clamped by said hand of said POI around a longitudinal direction of said body, and measure a clamping force of said hand, and
- at least one grip provided to be removably attached to said body, and adapt the size of said device in at least one direction.

The present invention thus proposes a device comprising a force measuring body, also called body in the following, to measure the clamping force of the hand of a POI. Moreover, the device according to the invention comprises a grip, provided to be attached to the measuring body. The grip is removably attached to the body and may thus be changed and replaced easily, and in particular without use of a tool, so that several grips may be used, interchangeably, one at a time. The grip is intended to adapt the size of the device to the size of the hand of the POI. Thus, the device according to the invention is more adaptable and more ergonomic to use for different POIs, and provides more accurate force measurement results. Indeed, the inventors have noticed that when the size of a force measuring device is not adapted to the size of the hand, i.e. when the device is too small or too big for the hand, the clamping force measurements are note accurate.

Since the grip may be changed easily, the cleaning and the maintenance of the device according to the invention are facilitated.

Moreover, by changing the size, for example the width or the thickness and/or even the length, of the device it is possible to carry out measurements in different configurations, or to carry out different types of exercises, thus rendering the device according to the invention more usable. For example, the device may be used for measuring the clamping force when the hand is totally clamped, and/or when the hand is clamped half way, and/or when the hand is barely clamped.

In the present document, the "clamping direction" designates the direction around which a hand of a person clamps. In use, the clamping direction and the longitudinal direction of the device according to the invention are the same.

The device according to the invention may comprise at least one battery.

At least one battery may be rechargeable.

At least one battery may be arranged in the measuring body.

In some embodiments, the device according to the invention may comprise, or may be intended to be used with, several interchangeable grips removably attachable to the measuring body, one at a time.

At least two grips may be identical.

At least two grips may present different lengths in the longitudinal direction. Thus, said grips allow adaptation of the length of the device according to the invention to hands of different heights.

At least two grips may present different widths or thickness in a direction perpendicular to the longitudinal direction. Thus, said grips allow adaptation of the thickness, or the width, of the device according to the invention to hands of different lengths.

Advantageously, at least one, and in particular each, grip may comprise an outer surface that is softer than the rest of the grip.

By outer surface, it is meant the surface of the grip that is in contact with the palm of the hand of the POI. This is the surface of the grip opposite to the measuring body when said grip is attached to said body.

Thus, the device according to the invention is more ergonomic to use for the users and does not harm the palm of the user in use.

The outer surface may be softer by depositing a softer coating or a layer of soft material, or a foam, on the outer surface of the grip, such as soft rubber or silicone or polyurethane.

The grip may be attached to the body by any attachment means, as long as the attachment is carried out in a removable way.

According to some embodiments, the attachment of the grip to the body may be carried out by adhesive attachment means, by screwing, by clipping, etc.

In some embodiments, the grip may be attached to the body by magnetic means. In this case, for example:
- one or several magnets may be provided on the grip, respectively on the body, and
- one or several magnets, or metal members, may be provided on the body, respectively on the grip;
so that a magnetic attachment is carried out between the grip and the body.

In some embodiments, the magnet(s) may be provided on the grip, and especially at the longitudinal edge(s) of the grip. Plus, at least one magnet is intended to cooperate with magnets, or metallic members, arranged on the body at suitable location(s). In this configuration when the grip and the body are in close positions the attachment is triggered and the grip is attached to the body in a removable fashion.

The size of the grip around the longitudinal direction may be adapted. For example, the size of the grip around the longitudinal direction may be chosen so that the grip covers between 25 to 75% of the outer surface of the device around said longitudinal direction.

In some embodiments, at least one grip may cover half of the outer surface of the device according to the invention around the longitudinal direction. In other words, at least one grip may cover the outer surface of the device according to the invention over the half of the perimeter of said device around the longitudinal axis.

In some embodiments, the body may comprise a top surface that, in use, is directed towards the face of the user and is not covered by the grip.

Such a top surface may represent a small surface compared to the total size of the device in the direction perpendicular to the longitudinal direction.

In some embodiments, the top surface may extend over the total size/thickness/width of the device in the direction perpendicular to the longitudinal direction.

In some embodiments, the top surface may be perpendicular to the longitudinal direction. Alternatively, there might be a non-zero angle between said top surface and the longitudinal direction. In this latter case, the top side/surface of the device, i.e. the side/surface of the device directed towards the face of the user, is bevelled. It has been observed that such a bevelled surface allows a better view of said surface by the user.

Advantageously, the device according to the invention may comprise at least one command button arranged on the top surface of the measuring body.

Thus, the device according to the invention allows access to said command button during force measurement, and more general during use of the device. Such a command button may be placed so that it may be manipulated by the thumb of the hand clamping the device.

The command button may be used to command at least one function, such as at least one the following functions: starting/stopping the device, changing an exercise, changing a force measurement technique, triggering data transmission from the device to an external apparatus, etc.

Advantageously, the device according to the invention may comprise a display means arranged on the top surface of the measuring body.

Thus, the device according to the invention allows access to said display during force measurement, and more general during use of the device.

The display may comprise at least one led, or at least one screen, or any other display means.

The display means may display information/data regarding the status of the device, notifications regarding the device, notifications regarding the POI, and/or notifications regarding the measurement force, etc.

Advantageously, the device according to the invention may comprise an electrical interface arranged on the top surface of the measuring body.

Thus, the electrical port is accessible at any time, especially during use of the device.

The electrical interface may be of any type. Preferably, the electrical interface may be a USB port.

The electrical interface may be used for charging the device, and especially a battery of the device.

Alternatively, or in addition, the electrical interface may be used for wired communication between said device and an external apparatus, such as a computer, a tablet, a server, etc.

In some embodiments, the device according to the invention may comprise a shell piece arranged on the body, and especially on the housing of the body.

The shell piece may be a component independent from the housing of the body and fixed to the body. In this case, the shell piece may be fixed to the body in a removable way, especially without use of a tool. Alternatively, the shell piece may be fixed to the body in a non-removable way, for example by welding.

The shell piece may not be a component independent from the housing of the body. In other words, the shell piece may be an integral part of the housing of the body.

The shell piece may cover part of the body around the longitudinal direction. More particularly, the shell piece may cover the body over between 25% to 75% of the perimeter of said body around the longitudinal axis. In a non-limitative example, the shell piece may cover the 50% of the perimeter of said body around the longitudinal axis. In this later case, the shell piece forms a half-shell of the device according to the invention around the longitudinal axis.

If the device according to the invention comprises a shell piece, the grip may be attached to said shell piece in a removable way. For example, when attached, the edge(s) of the grip may be facing, and preferably be in contact with, the edge(s) of the shell piece in the longitudinal direction.

For example, the grip element may be clipped to the shell piece through their edges. In other examples, magnetic attachment components, i.e. magnets and/or metallic members, may be arranged on/in the edges of the grip and the shell piece.

Of course, the measuring body comprises a force sensor, especially for measuring the force exerted by the hand of the POI.

Such a sensor is known and its architecture, and its integration in the device may done according to known techniques.

The measuring body may also comprise an inertia sensor, and/or an angle sensor, and/or an accelerometer.

Such sensor(s) allow controlling, and proper positioning, of the device during use, enhancing the usability of the device according to the invention, and the accuracy of the measurements.

Plus, such sensor(s) allows efficient and proper use of the device according to the invention for measurement(s)/exercice(s) involving movement from the POI and/or the third person, such as isokinetic measurement(s)/exercice(s), for example when the POI has to move his wrist during clamping.

Such sensor(s) also allows controlling and proper positioning the measuring device when the POI has to exert clamping force at a given angle.

### Description of the figures and embodiments

Other advantages and characteristics will become apparent on examination of the detailed description of an embodiment which is in no way limitative, and the attached figures, where:
- FIGURES 1-3 are diagrammatic representations of a non-limitative example of a device according to the invention;
- FIGURE 4 is a diagrammatic representation of another non-limitative example of a device according to the invention; and
- FIGURE 5 is a diagrammatic representation of a device according to the invention, in an exploded view.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures retain the same reference.

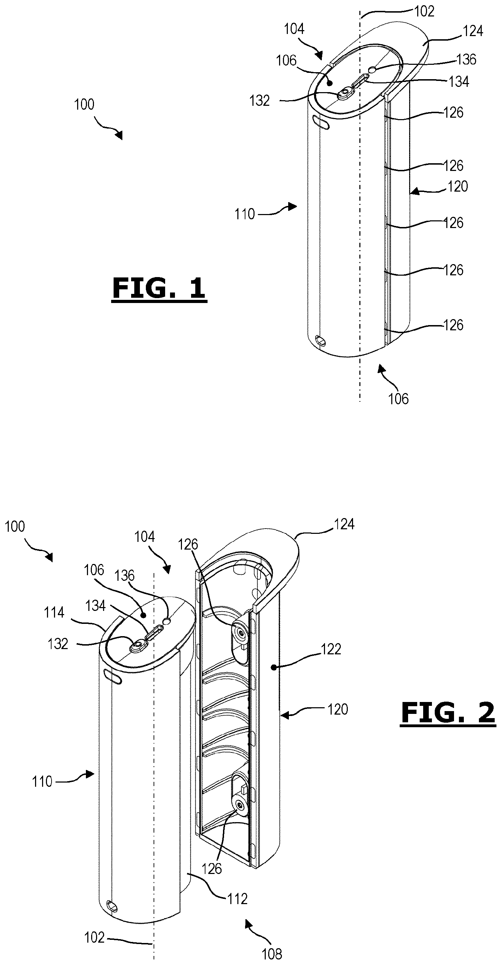

FIGURE 1 is a diagrammatic representation of a non-limitative example of a device according to the invention, according to an isometric view.

FIGURE 2 is a diagrammatic representation of the device of the FIGURE 1, according to an exploded isometric view.

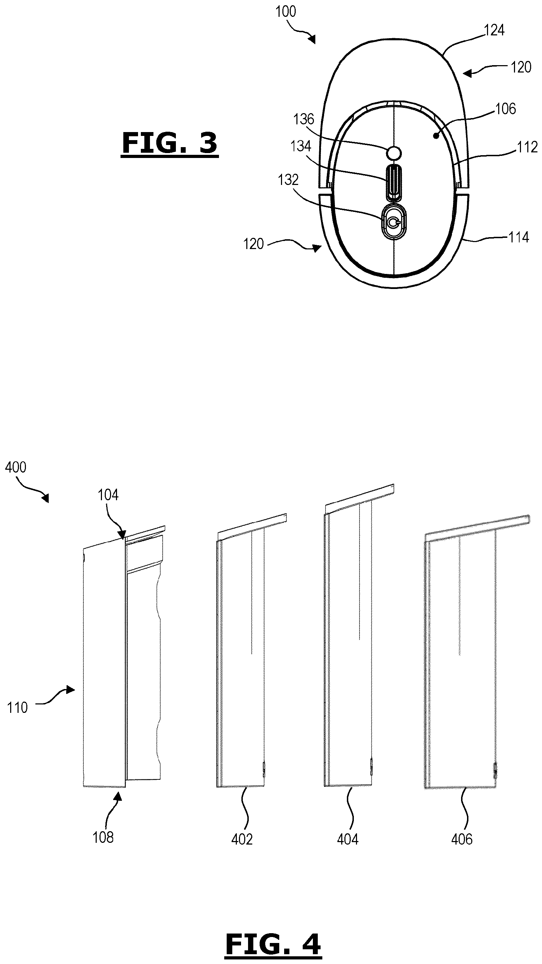

FIGURE 3 is a diagrammatic representation of the device of the FIGURE 1, from the top side of the device.

The device 100, shown in FIGURES 1-3, may be used, for example, for measuring the clamping force of the hand of a person of interest, POI. The device 100 is meant to be hold in the hand of the POI and clamped around a clamping direction 102, which in the example shown in FIGURES 1-3 is also a longitudinal direction of the device 100.

The device 100 have a generally longitudinal form that extends along the clamping/longitudinal direction 102. In the example shown in FIGURES 1-3, the device 100 has a generally round, or elliptic, cross-section in the plane perpendicular to the longitudinal direction 102.

The device 100 has a top side 104 comprising a top surface 106 that are supposed to be directed towards the face of the user when said device is clamped by the user, most of the time. Opposite to the top side 104, in the longitudinal direction 102, the device 100 has a bottom side 108.

The device 100 comprises a main body 110 comprising at least one sensor (not shown) for measuring the clamping force of the hand of the POI. Although not shown in the FIGURES 1-3, the main body 110 also comprises an electronic board, a battery, etc. More generally, the body 110 may comprise all functional components of the device 100 for clamping force measurements.

The body 110 comprises an outer housing 112 enclosing all the components of the body 110 and delimiting the body. The housing 112 forms the outer shell of the body 110.

As for the device 100, the body 110 has a generally longitudinal form that extends along the longitudinal direction 102.

The housing 112 of the body 110 may be made of any material suitable for clamping force measurement. For example, the housing 112 may be made of plastic, and especially hard plastic.

The body 110 also comprises an additional shell piece 114 that covers part of, for example half of, the surface of the body 110, arranged on/over the housing 112. The shell piece 114 thus has the form of a half-shell around the longitudinal direction. The inner face of the shell piece 114 is conformed to the outer face of the body 110 so that the shell piece 114 fits on the outer surface if the housing 112 of body 110.

The shell piece 114 may be attached to the body 110, with any attachment means, in detachable/removable manner, or not. For example, the shell piece 114 may be attached to the body 110 by welding, screwing, etc.

In the example of FIGURES 1-3, the shell piece 114 is separate from the housing 112 of the measuring body 110. In other embodiments (not shown), the shell piece 114 may be integral to the housing 112 of the body 110, and may not be a separate piece.

In some embodiments, the shell piece 114 is part of the body 110; more particularly, the shell piece 114 is screwed to the body 110 so that the shell piece 114 realizes part of the housing of the body 110. In this case, the shell piece 114 may have the mounting points of the force sensor(s) so that the force sensor(s) are mounted on said shell piece.

The device 100 also comprises a grip 120 attached to the body 110 in a removable manner, and in particular in a manner that it may be attached to the body 110 and detached from the body 110, manually without use of a tool.

The grip 120 may be made of any material suitable for clamping force measurement. For example, the grip 120 may be made of plastic, and especially hard plastic.

In advantageous embodiments, the grip 120 may have a softer outer surface 122, or a softer coating deposited on its outer surface 122, such a foam, a rubber, etc.

As the for the device 100 and the body 110, the grip has a generally longitudinal form that extends along the longitudinal direction 102.

In the example shown in FIGURES 1-3, the grip 120 covers the half of the surface of the body 110. In other words, the grip 120 represents a half-shell for the body 110, around the longitudinal direction 102, and is placed/attached to the body 110, over the housing 112 of said body 110. The inner face of the grip 120 is conformed to the outer face of the body 110, and in particular the outer surface of the housing 112, so that the grip 120 fits on the outer surface of the body 110 when it is attached to the body 110.

The grip 120 comprises, on the top side 104 of the device a strip 124. The strip 124 forms a limit for the hand of the POI and helps the POI for positioning his hand around the device 100.

More importantly, the strip 124 is used to pull over it in order to detach the grip 120 from the body 110. Thus, the manipulation of the grip 120 is facilitated.

In the example shown, the strip 124 is positioned on the top side 104 of the device 100. Of course, in other embodiments, the strip 124 may be positioned elsewhere, for example at the bottom side of the device 100 for example.

As indicated above, the grip 120 is attached to the body 110 in a removable manner, and in particular without use of a tool for attaching and detaching it. Such an attachment may be done in different ways, for example by clipping the grip to the body 110, or to the shell piece 114.

In the example shown in FIGURES 1-3, the grip 120 is attached to the body 110 by magnetic attachment means.

More specifically, and without loss of generality, the grip 120 comprises at least one, and preferably several magnets 126 arranged in/on the grip 120 that cooperate with metallic members or magnets (not shown) arranged in/on the body 110, or the shell piece 114, for attaching the grip 120 to the body 110.

The magnets 126 may be placed anywhere on the grip 120. In the non-limitative example shown on FIGURES 1-3, the magnets 126 are placed inside the grip 124, on the internal face of the grip 124. More particularly, the grip 120 comprises two magnets arranged in the grip. The magnets 126 cooperate with magnets, or metallic members, arranged in the edge of the shell piece 114 facing the edge of the grip 120.

Thus the grip 120 may be attached to the body 110 easily. Conversely, the grip 120 may be detached from the body 110 easily.

Of course the number and the arrangement of the magnets described with reference to FIGURES 1-3 are in no way limitative. In other embodiments, the magnets 126 may be placed on the body 110 and the metallic members may be placed on the grip 120, and/or a continuous magnetic strip may be used instead of several magnets, the magnets may be placed elsewhere than on the edge of the grip, etc.

Preferably, the magnets should not interfere with the measurement of the clamping force. They are though part of the force path.

Such a detachable grip 120 may be changed and replaced easily so that several grips may be used, interchangeably, one at a time. The grip 120 is intended to adapt the size of the device 100 to the size of the hand of the POI. Thus, the device according to the invention is more adaptable and more ergonomic to use for different POIs, and provides more accurate force measurement results.

Since the grip 120 may be changed easily, the cleaning and the maintenance of the device 100 are facilitated.

Moreover, by changing the size, i.e. height or thickness, of the grip 120, it is possible to change the size, i.e. height or thickness, of the device 100. Thus it is possible to carry out measurements in different configurations, or to carry out different types of exercises, thus rendering the device according to the invention more usable. For example, the device may be used for measuring the clamping force when the hand is totally clamped, when the hand is clamped half way, or when the hand is barely clamped.

The device 100 also comprises a command button 132 arranged on the top surface 106. Thus, the command button 132 is accessible any time to the POI or to the user when the device is in use.

The command button 132 may be used to command at least one function, such as at least one the following functions: starting/stopping the device, changing an exercise, changing a force measurement technique, triggering data transmission from the device to an external apparatus, etc.

The device 100 further comprises a USB port 134 arranged on the top surface 106. Thus, the USB port 134 is accessible at any time, especially during use of the device 100.

The USB port 134 may be used for charging the device 100, and especially a battery of the device 100. Alternatively, or in addition, the USB port 134 may be used for wired communication between said device 100 and an external apparatus, such as a computer, a tablet, a server, etc. for data transmission.

In the non-limitative example shown in FIGURES 1-3, the device 100 also comprises a light indicator 136, such as a led. The light indicator 136 is placed on the top surface 106 so that the user has visual access to said indicator 136 at any time, and especially during use of the device 100.

The light indictor 136 may display information/data regarding the status of the device, the status of the battery of the device, notifications regarding the device, notifications regarding the POI, and/or notifications regarding the measurement force, etc.

FIGURE 4 is a diagrammatic representation of another non-limitative example of a device according to the invention.

The device 400 of FIGURE 1 comprises a body, that may be the body 110 of the device 100 of FIGURES 1-3.

The device 400 further comprises several, and in particular, three interchangeable grips 402-406, that may be attached to the body 110 in a removable way, one at a time. Each of the grips 402-406 may comprise all the characteristics of the grip 120 of the device 100 of FIGURES 1-3.

In the device 400, the grips 402-406 vary in their sizes. Indeed, the grip 404 is longer/higher than the grip 402 and have the same thickness as the grip 402, whereas the grip 406 have the same length/height as the grip 402 but have a greater thickness. Thus grips 402-406 may be used for different persons having different hand sizes in order to adapt the device 400 individually for each person.

The grips 402-406 are given for sake of example. The device according to the invention is not limited to three grips, and is not limited to grips with different heights, or with different thicknesses. For example, the grips may vary only in their thicknesses but have the same height/length. In other examples, the grips may vary only in their height/length but have the same thickness.

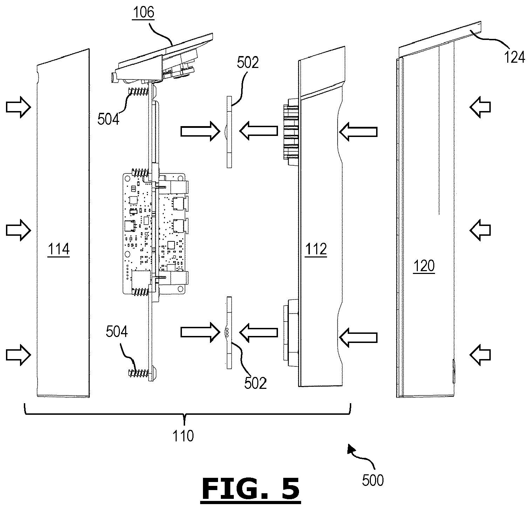

FIGURE 5 is a diagrammatic representation of a device according to the invention in an exploded view.

The device 500 of FIGURE 5 may for example be any one of the devices of FIGURES 1-4.

The device 500 comprises a measuring body, such as the measuring body 110, and a grip, such as any one of the grips 120, 402-406. IN the following, without loss of generality, the device 500 comprises the grip 120 of the device 100.

The device 500 is shown in a fully exploded configuration on FIGURE 5 so that even the measuring body 110 is represented in an exploded configuration. As shown, the measuring body comprises, at least one, and in particular two force measuring sensors 502 arranged in the measuring body 110. Each sensor 502 is in contact with the shell piece 114 on the one hand and the housing piece 112 on the other hand. Each sensor may in particular be fixed to the shell piece 114 to the housing 112.

Also, the shell piece 114 is fixed to the measuring body 110 with screws 504.

The measuring body 110 also comprises an electronic board 506 comprising other components of the device 500, such as a battery, a chip, and other electronic components.

FIGURE 5 also shows the force path when a clamping force is applied to the device 500. The clamping force applied to the grip 120 and to the shell piece 114 is transmitted to the force measuring sensors as indicated by the solid arrows. The solid arrows may also indicate physical contact points transmitting the clamping force from one component to the other.

Of course, the device is not limited to the particular example shown in FIGURE 5. For example, the device according to the invention may comprise only one, or more than two force sensors. The force transmitting contact points may be different than those indicated in FIGURE 5.

More generally, the invention is not limited to the examples detailed above.

## Claims

1. A portable handheld device (100;400;500) for measuring the clamping force of a hand of a person of interest, POI, said device comprising:
- a force measuring body (110), enclosed in a housing (112), provided to be held and clamped by said hand of said POI around a longitudinal direction (102) of said body (110), and measure a clamping force of said hand; and
- at least one grip (120;402-406), provided to be removably attached to said body (110), and adapt the size of said device (100;400) in at least one direction.

2. The device (100;400;500) according to the preceding claim, **characterized in that** it comprises several interchangeable grips (120;402-406) removably attachable to the measuring body (110), one at a time.

3. The device (100;400;500) according to any one of the preceding claims, **characterized in that** at least one grip (120;402-406) comprises an outer surface (122) that is softer than the rest of the grip (120;402-406).

4. The device (100;400;500) according to any one of the preceding claims, **characterized in that** at least one grip (120;402-406) is removably attached to the measuring body (110) by magnetic means (126).

5. The device (100;400;500) according to any one of the preceding claims, **characterized in that** at least one grip (120;402-406) covers half of the outer surface of the device (100;400) around the longitudinal direction (102).

6. The device (100;400;500) according to any one of the preceding claims, **characterized in that** the body (110) comprises a top surface (106) that, in use, is directed towards the face of the user and is not covered by the grip (120;402-406).

7. The device (100;400;500) according to the preceding claim, **characterized in that** it further comprises at least one command button (132) arranged on the top surface (106) of the measuring body (110).

8. The device (100;400;500) according to any one of the claims 6 to 8, **characterized in that** it further comprises an electrical interface (134) arranged on the top surface (106) of the measuring body (110).

9. The device (100;400;500) according to any one of the claims 6 to 7, **characterized in that** it further comprises a display means (136) arranged on the top surface (136) of the measuring body (106).

10. The device (100;400;500) according to any one of the preceding claims, **characterized in that** the measuring body (110) comprises a force sensor (502), and at least one of the following sensors: an inertia sensor, and/or an angle sensor, and/or an accelerometer.
